(19) Europäisches Patentamt
European Patent Office
Office européen des brevets

(11) EP 2 122 415 B1

(12) EUROPÄISCHE PATENTSCHRIFT

(45) Veröffentlichungstag und Bekanntmachung des Hinweises auf die Patenterteilung:
20.03.2013 Patentblatt 2013/12

(51) Int Cl.:
G03B 35/24 (2006.01)          G02B 27/22 (2006.01)
H04N 13/04 (2006.01)

(21) Anmeldenummer: 08701123.5

(22) Anmeldetag: 16.01.2008

(86) Internationale Anmeldenummer:
PCT/EP2008/000270

(87) Internationale Veröffentlichungsnummer:
WO 2008/095584 (14.08.2008 Gazette 2008/33)

(54) **Autostereoskopisches Bildwiedergabegerät zur Erzeugung eines schwebenden reellen Stereobildes**

Autostereoscopic image display appliance for producing a floating real stereo image

Dispositif de reproduction d'image autostéréoscopique pour produire une image stéréo réelle flottante

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.02.2007 DE 102007006038**

(43) Veröffentlichungstag der Anmeldung:
**25.11.2009 Patentblatt 2009/48**

(73) Patentinhaber: **Fraunhofer-Gesellschaft zur Förderung der angewandten Forschung e.V.**
**80686 München (DE)**

(72) Erfinder:
• **DE LA BARRÉ, René**
**09648 Mittweida (DE)**
• **PASTOOR, Siegmund**
**10823 Berlin (DE)**
• **RÖDER, Hans**
**14057 Berlin (DE)**

(74) Vertreter: **Pfenning, Meinig & Partner GbR Patent- und Rechtsanwälte Joachimstaler Strasse 12 10719 Berlin (DE)**

(56) Entgegenhaltungen:
WO-A-92/03021          DE-A1- 19 537 499
DE-C2- 19 827 590      GB-A- 2 336 220
US-A1- 2004 227 992    US-B2- 6 771 231

• MATSUMOTO K: "RESEARCH OF 3-D DISPLAY USING THE ANAMORPHIC OPTICS" PROCEEDINGS OF THE SPIE, SPIE, BELLINGHAM, VA, Bd. 3012, 11. Februar 1997 (1997-02-11), Seiten 199-207, XP008022267 ISSN: 0277-786X

**Beschreibung**

Die Erfindung bezieht sich auf ein autostereoskopisches Bildwiedergabegerät mit einem Bildschirm und einer Zylinderlinsenplatte zur Darstellung der Bildinformation für das rechte Auge und das linke Auge eines Betrachters in Form von jeweils Bildstreifenpaaren bildenden, alternierenden Bildstreifen gleicher Breite, wobei jedem Bildstreifen seitliche Reservezonen zugeordnet sind und die Zylinderlinsenplatte so vor dem Bildschirm angeordnet wird, dass für jedes Auge nur die zugehörige Bildinformation sichtbar wird.

**STAND DER TECHNIK**

Bei den autostereoskopischen Darstellurigsverfahren, die beispielsweise für die Informations- und Kommunikationstechnik, die Medizintechnik und die Computer- und Videotechnik sowohl im öffentlichen als auch im privaten Bereich vielfältig einsetzbar sind, wird der gesamte Aufwand der augenrichtigen Stereoseparation im Verfahren und im umsetzenden System selbst geleistet; zusätzliche nutzergebundene Hardware, beispielsweise Brillen, werden nicht benötigt, wodurch sich der Nutzerkomfort wesentlich erhöht. Das Prinzip der autostereoskopischen Darstellungsverfahren beruht auf einer Rasterung verschiedener Bildansichten auf einem Bildschirm (beispielsweise Flachbildschirm, LCD- oder Plasma-Bildschirm) und einer optischen Trennung dieser gerasterten Ansichten in Richtung auf die Augen eines Betrachters, sodass von jedem Auge immer nur Anteile einer einzigen Bildansicht in einem optischem Zusammenhang erfasst und gemeinsam zu einer perspektivischen Ansicht zusammengefügt werden. Das Trennraster weist dazu viele benachbart angeordnete Trennelemente, beispielsweise Trennstreifen, Schlitze, Zylinderlinsen oder Prismen, auf. Bei der vorliegenden Erfindung wird eine Zylinderlinsenplatte als Trennraster eingesetzt und die Bildinformation in Bildstreifen segmentiert. Zylinderlinsen haben zwar die grundsätzliche Eigenschaft, einen Punkt als Linie abzubilden. Ein durch eine Zylinderlinse abgebildeter Bildstreifen besteht daher aus der Überlagerung einer Vielzahl von Linien, die den Pixeln in der Bildinformation im Bildstreifen entsprechen. Das menschliche Auge ist aber in der Lage, die ursprüngliche Bildinformation aus der Überlagerung herauszufiltern.

Bei allen herkömmlichen autostereoskopischen Zylinderlinsen-Bildschirmen entsteht das virtuelle Stereobild direkt auf dem Linsenraster. Die Stereo-Szene kann aber durch geeignete Wahl der Perspektiven im linken und rechten Stereo-Bild scheinbar vor das Linsenraster gelegt werden. Die Augen des Betrachters fokussieren dann auf das Linsenraster und seine Augachsen konvergieren vor dem Linsenraster in der Stereo-Szene. Um diesen Akkomodations-Konflikt zu vermeiden, wird bei den bekannten Bildschirmen die Stereo-Szene in das Linsenraster gelegt. Darstellungen von Objekten, die aus dem Zylinderlinsen-Bildschirm herausragen oder sogar vor diesem schweben, beispielsweise in Produktblättern, dienen der Veranschaulichung der autostereoskopischen Eigenschaften des Bildschirmes. Ein schwebendes Stereobild wird nicht erzeugt.

Als optische Abbildung wird die Vereinigung der von einem Objektpunkt ausgehenden divergenten Lichtstrahlen in einen Punkt, dem Bildpunkt, bezeichnet. Abbilden heißt also Strahlvereinigung. Bewerkstelligt wird dies mehr oder weniger genau durch Linsen, Spiegel oder eine\ Kombination aus beiden - dem optischen System. Wenn die Vereinigungspunkte der Strahlen mit einem Schirm aufgefangen werden können, bezeichnet man die Abbildung als reell, es liegt ein reelles Bild vor. Die Struktur aus den reellen Strahlschnittpunkten im Raum wird oft auch 'Luftbild' genannt. Verlassen die von einem Objektpunkt ausgehenden Strahlen das optische System divergent, und schneiden sich nur ihre rückwärtigen Verlängerungen in einem scheinbaren Punkt, wird die Abbildung als virtuell bezeichnet. Virtuelle Bilder lassen sich nicht auf einem Schirm auffangen, können aber gesehen werden, weil die Augenlinse das divergente Strahlenbündel wieder konvergent macht, und auf der Netzhaut ein reelles Bild erzeugt. Ein alltägliches Beispiel für ein virtuelles Bild ist das Spiegelbild. Im Gegensatz zu den virtuellen Bildern sind die reellen Luftbilder keine alltägliche Erscheinung. Das liegt zum einen daran, dass zu ihrer Erzeugung im Allgemeinen komplexere optische Systeme erforderlich sind, zum anderen haben die kegelförmigen Strahlenbüschel durch die reellen Bildpunkte in der Regel sehr kleine Öffnungswinkel. Um das reelle Bild aber sehen zu können, muss sich das Auge in diesem Strahlenkegel befinden - schon dicht daneben ist das reelle Bild unsichtbar. Deshalb werden bei der Bildprojektion weit streuende Bildwände verwendet, um reelle Bilder zu zeigen.

Die stereoskopische Projektion in eine schwebende Ebene ("Luftbildebene") ist seit Langem bekannt. Eine einfache Anordnung besteht aus zwei Projektionseinheiten und einer großen (Fresnel-)Linse. Die Projektionseinheiten - je eine Bilddarstellung und ein Projektionsobjektiv - projizieren die Bilddarstellung für das rechte Auge und die für das linke Auge durch die große (Fresnel-)Linse, und zwar so, dass beide Bilder direkt aufeinander liegen. Die beiden Projektionsobjektive werden ebenfalls von der (Fresnel-)Linse reell abgebildet ('Pupillenbilder'). Die Reihenfolge in Projektionsrichtung ist dann: Bilddarstellung - Projektionsobjektiv - reelle Luftbilder - Bilder der Projektionsobjektive. Die zwei nebeneinander liegenden reellen 'Pupillenbilder' sind die 'Gucklöcher', durch die der Betrachter das Stereobild sehen kann.

Alternativ zu der bei diesen Verfahren eingesetzten (Fresnel-)Linse kann auch ein großer Kugelspiegel Verwendung finden (vergleiche beispielsweise DE 699 00 470 T2**.** Der Ortsinvarianz der Pupillenabbildung konnte bislang nur mit der mechanischen Nachführung der gesamten Projektionseinrichtung oder von Teilen derselben begegnet werden. Generell sind diese Verfahren durch ihre langen Projektionswege und die großen Abmessungen des autostereoskopischen Projektionsgerätes gekennzeichnet (vergleiche beispielsweise US 2004/0227992 A1**).**

Aus dem Stand der Technik ist bislang kein autostereoskopisches Bildwiedergabegerät mit einer Zylinderlinsenplatte bekannt, mit dessen Hilfe ein reelles Stereobild in einer vor der Zylinderlinsenplatte liegenden Stereobildebene erzeugt werden kann. Vielmehr sind solche Anordnungen bekannt, bei denen mit Hilfe einer Vielzahl von rotationssymmetrischen Mikrolinsen, die in einem Array neben- und übereinander angeordnet sind, ein in einer vor dem Mikrolinsenarray liegenden Stereobildebene schwebendes reelles Stereobild erzeugt wird (vergleiche US 6.771.231 B2**).** Dabei werden zwei Mikrolinsenarrays voreinander gelegt, was eine Aufwandsverdopplung für die komplexe Linsenplatte bedeutet. Durch die optische Abbildung der nichtinvertierten originalen Bildinformation mit rotationssymmetrischen Mikrolinsen könnte das reelle Stereobild direkt mit einer Mattscheibe sichtbar gemacht werden. Das menschliche Auge muss keinen Filterungsprozess durchführen. Das Mikrolinsenarray wird aber mit einem relativ großen Abstand vor dem Bildschirm angeordnet, sodass sich für das gesamte Bildwiedergabegerät eine relativ große Gerätetiefe ergibt.

Durch die Lage des erzeugten Stereobildes vor dem Mikrolinsenarray ergibt sich kein Akkomodationskonflikt mit im Bereich der Stereobildebene angeordneten konkreten Gegenständen (vergleiche US 6.771.231 B2**, Figur 3:** zwei Tannenbäume 31 im Bereich der Stereobildebene 30 mit dem Stereobild P in Form eines Autos). Der Akkomodationskonflikt beschreibt das Problem der Entkopplung von Akkomodation und Konvergenzverhalten der Augen. Dabei wird unter Akkomodation die Scharfstellung der einzelnen Augen auf eine bestimmte Sehentfernung verstanden. Als Konvergenzverhalten hingegen wird das Bestreben des menschlichen visuellen Systems bezeichnet, die Blicklinien der beiden Augen auf einen Punkt auszurichten. Bei der Betrachtung eines Punktes in einer realen Szene ist die Akkomodationsentfernung gleich der Konvergenzentfernung. Bei einem stereoskopischen Bildwiedergabegerät werden die verschiedenen Punkte einer räumlichen Szene jedoch unabhängig von ihrer räumlichen Tiefe in einer gemeinsamen Schärfeebene abgebildet. Die Akkomodationsentfernung ist also für alle Punkte gleich. Andererseits ist aber die Konvergenzentfernung abhängig von der räumlichen Tiefe des betrachteten Punkts und variiert somit. Durch diese widersprüchlichen Informationen kommt es zum Akkomodationskonflikt, der schnell zu Ermüdungserscheinungen beim Betrachter führen kann (vergleiche DE 195 37 499 C2**).**

Grundsätzliches Merkmal bei der Erfindung ist die verwendete Zylinderlinsenplatte als Trennraster. Da aus dem Stand der Technik eine Vielzahl von autostereoskopischen Bildwiedergabegeräten mit Zylinderlinsenplatte bekannt sind, die grundsätzlich mit allen ihren Eigenschaften und Möglichkeiten (beispielsweise Tracking) für eine Umsetzung der Erfindung geeignet sind, geht die Erfindung von der nachfolgend erläuterten Druckschrift als nächstliegendem Stand der Technik aus.

Aus der DE 198 27 590 C2 ist ein gattungsbildendes autostereoskopisches Bildwiedergabegerät mit einem Bildschirm und einer Zylinderlinsenplatte bekannt. Die Bildinformation für das rechte Auge und das linke Auge eines Betrachters werden in Form von Bildstreifen gleicher Breite dargestellt, die einander abwechselnd auf dem Bildschirm ineinander verschachtelt angeordnet sind (Bildstreifen //linkes Auge/rechtes Auge//linkes Auge/rechtes Auge// usw.). Immer ein Bildstreifen für das linke Auge und der zugehörige Bildstreifen für das rechte Auge bilden dabei ein Bildstreifenpaar. Die Zylinderlinsenplatte weist an die Bildstreifen angepasste Zylinderlinsen auf und ist so vor dem Bildschirm angeordnet, dass für jedes Auge nur die zugehörige Bildinformation sichtbar wird. Weiterhin ist aus der DE 198 27 590 C2 bekannt, Positionsänderungen durch eine redundante Darstellung der Bildansichten zu kompensieren. Jedem Bildstreifen werden dazu seitliche Reservezonen zugeordnet. Dadurch wird jedem Auge des Betrachters auch dann die richtige und vollständige Bildinformation angeboten, wenn die Betrachtungsposition innerhalb gewisser Grenzen variiert wird, ohne dass die Zylinderlinsenplatte mechanisch nachjustiert werden muss. Weiterhin kann die Bildinformation der Kopfposition des Betrachters angepasst und nachgeführt werden (Tracking). Ein schwebendes reelles Stereobild wird jedoch auch mit diesem Bildwiedergabegerät mit Zylinderlinsenplatte nicht erzeugt.

Ein anderes gattungsgemäßes Bildwiedergabegerät, bei dem ebenfalls kein zwischen Zylinderlinsenplatte und Betrachter schwebendes reelles Stereobild erzeugt wird, ist in der Druckschrift WO 92/03021 A1 gezeigt.

**AUFGABENSTELLUNG**

Die **Aufgabe** für die Erfindung besteht daher darin, ausgehend von dem eingangs beschriebenen gattungsgemäßen autostereoskopischen Bildwiedergabegerät mit Zylinderlinsenplatte ein weitergebildetes autostereoskopisches Bildwiedergabegerät zur Verfügung zu stellen, mit dem ein schwebendes reelles Stereobild in eine vor der Zylinderlinsenplatte liegende Stereobildebene projiziert werden kann. Dabei soll aber gleichzeitig gegenüber bekannten Vorrichtungen zur Erzeugung von schwebenden Stereobildem das Bildwiedergabegerät mit Zylinderlinsenplatte seine normale - sehr geringe - Bautiefe, seine großflächige Projektionsoptik und seine sonstigen bekannten positiven Eigenschaften, wie beispielsweise die betrachternachgeführte Bildwiedergabe nicht verlieren. Auch soll der erzeugte Projektionsweg so kurz sein, dass die Stereobildebene zwischen der Zylinderlinsenplatte und dem Betrachter liegt, sodass dieser in bequemer Sitzhaltung vor dem Bildwiedergabegerät beispielsweise mit seiner Hand in die Stereobildebene eingreifen kann (Mixed-Reality-Darstellung).

Die erfindungsgemäße **Lösung** für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Das erfindungsgemäße autostereoskopische Bildwiedergabegerät mit einem Bildschirm und einer Zylinderlinsenplatte ist durch zwei grundsätzliche Merkmale gekennzeichnet:

● jeder Bildstreifen ist seitenverkehrt gegenüber seiner Anordnung in der originalen Bildinformation dargestellt und
● alle Bildstreifen sind mit solchen Lücken zu ihren beiden benachbarten Bildstreifen auf dem Bildschirm positioniert; dass der Betrachter in der Stereobildebene, die zwischen der Zylinderlinsenebene und der Betrachteraugenebene liegt, eine lückenlose Darstellung der Bildinformation in Form eines schwebenden reellen Stereo bildes erhält.

Neben der speziellen Darstellung der Bildstreifen wird das Merkmal 2) also ausschließlich durch eine Veränderung der Abstände der einzelnen Bildstreifen zueinander erreicht. In der Praxis wird eine solche Variation durch die geometrischen Parameter des Bildwiedergabegeräts und der Relation zwischen dem Betrachter und dem Bildwiedergabegerät erreicht, sodass dieses seine grundsätzliche Konzeption - insbesondere seine geringe Bautiefe und seine große Projektionsoptik - beibehält. Ein Ausführungsbeispiel ist dem speziellen Beschreibungsteil zu entnehmen.

Das erfindungsgemäße Wiedergabegerät ermöglicht eine 3D-Wiedergabe für einen einzelnen Betrachter. Die Darstellung im Greifbereich des Betrachters gestattet eine von Akkomodations- und Konvergenzkonflikten freie Wahrnehmung der dargestellten virtuellen Objekte und der in ihrer unmittelbaren Umgebung befindlichen realen Gegenstände wie Werkzeuge oder Hände des Betrachters. Damit können vom Betrachter virtuelle Objekte aus den Bildinformationen direkt und nicht mehr an die Zylinderlinsenplatte gebunden erfahren werden, sodass vom Betrachter im gleichen Bereich wahrgenommene virtuelle und reale Objekte ohne visuellen Konflikt gleichermaßen scharf gesehen werden können. Das erfindungsgemäße autostereoskopische Wiedergabegerät ermöglicht damit erstmals eine für den Betrachter höchstkomfortable Mixed-Reality-Darstellung. Die stereoskopische Darstellung räumlicher Szenarien entspricht dabei dem natürlichen Sehen und ermöglicht bereits eine präzise Zuordnung der Objekte im Raum. Dies wird bei der Erfindung noch dadurch verstärkt, dass die darzustellende Bildinformation zusammen mit realen Gegenständen als reelles, in der Luft schwebendes Stereobild zu sehen ist, in das der Betrachter greifen kann. Es ergibt sich somit für das autostereoskopische Bildwiedergabegerät nach der Erfindung ein großes Einsatzgebiet (beispielsweise 3D-Desktopdisplays für Medizin- und Fahrzeugtechnik, Moleküldesign, virtuelle Vitrinen in Museen, Event-Visualisierung, Spielgeräte in Spielhallen, Spielekonsolen für die Spieleindustrie)

Durch die vorgesehenen Reservezonen seitlich der Bildstreifen sind bereits seitliche Kopfbewegungen in einem vorgegebenen Bereich tolerierbar. Größere seitliche Kopfbewegungen und vor allem auch Kopfbewegungen in der Tiefe zum Bildschirm können nur bei einer Bildnachführung zugelassen werden. Dabei ergibt sich durch seitlich an den Bildstreifen vorgesehene Reservezonen, mit deren Bildinformationen die Lücken zwischen den Bildstreifen gefüllt sind, der Vorteil, eine gewisse Toleranz gegenüber geringen Kopfbewegungen des Betrachters und Verzögerungszeiten sowie kleine Ungenauigkeiten der Detektion zulassen zu können (Bildinhalte bleiben ortsfest, nur die nicht sichtbaren Ränder der Reservebereiche wandern). Deshalb zählt zu den bevorzugten Ausführungsformen der Erfindung neben bestimmten bevorzugten Festlegungen spezieller Parameter des Bildwiedergabegeräts gemäß der Unteransprüche 2, 3 und 4 - beispielsweise der Festlegung äquidistanter Abstände zwischen allen Bildstreifen - auch das Vorsehen einer Trackingvorrichtung zur Anpassung der Bildwiedergabe an Bewegungen des Betrachters parallel zum Bildschirm und/ oder im Raum. Mit dem Bildwiedergabegerät ist also sowohl eine Bildnachführung in der x-y-Ebene als auch zusätzlich im Abstand zum Bildschirm möglich. Insbesondere elektronische Trackingverfahren sind aus dem Stand der Technik hinlänglich bekannt. Ein elektronisches Tracking der Augenpositionen des Benutzers ermöglicht einen ausreichenden Bewegungsspielraum für Kopfbewegungen und gestattet es, die räumliche Darstellung der Bildinformation der Betrachterposition entsprechend wiederzugeben, wodurch eine "look around"-Darstellung (dynamische Perspektive) ermöglicht wird. Dabei erfolgt die optische Nachführung der Bilddarstellung für das linke und rechte Betrachterauge fließend ohne wahrnehmbare Umschalteffekte durch Schattenzonen und ohne, dass dafür Komponenten des autostereoskopischen Bildwiedergabegeräts mechanisch bewegt werden müssen.

Durch ein elektronisches Tracking der in den Wahrnehmungsraum eintauchenden Gegenstände oder der Hand des Benutzers soll gewährleistet werden, dass mit der Hand oder realen Werkzeugen natürlich wirkende Mixed-Reality-Interaktionen und Direktmanipulationen des virtuellen Objektes oder der virtuellen Szene ausgeführt werden können. Dabei können bei der Nachführung der Betrachtungszonen positionsabhängig die Bildinhalte auf dem Display verschoben werden. Die aktuelle Ansicht auf als Bildinformationen dargestellte Objekte und Szenen kann in Abhängigkeit von der Kopfposition des Betrachters verändert werden. Die Anordnung der Bildinhalte kann innerhalb der einander abwechselnden linken und rechten Bildstreifen erfolgen, somit über die einzelnen Bildstreifen hinausgehen. Insbesondere kann auch eine Nachführung der Bildinformationen bei Distanzänderungen des Betrachters (und auch für eine Anpassung an den individuellen Augenabstand des Betrachters) durch eine Veränderung der Breite der Bildstreifen und der Breiten der seitlichen Reservebereiche erfolgen. Ein elektronisches Tracking ist technisch relativ einfach mit handelsüblichen Bauteilen zu realisieren. Spezielle Multiplex-Schemata bei der Belegung der einzelnen Pixel in den Bildstreifen kommen den Anforderungen an ein elektronisches Tracking sehr entgegen und können sowohl in der Graphikkarte als auch in einer Kombination von Formatkonverter-Hardware und Graphikkarte leicht implementiert werden. In der Kombination ist es möglich, ohne speziellen Treiber ein übliches Stereoformat zu nutzen, die Anpassung der Stereo-Ansichten in der Graphikkarte vorzunehmen und die Verschachtelung der Bildstreifen im Formatkonverter durchzuführen. Bei der Erzeugung von Multiplex-Schemata können die Render-Parameter so verändert werden, dass alle dargestellten Objekte (virtuell und real) dem sich bewegenden Betrachter raumstabil und von gleicher Größe erscheinen.

Weiterhin kann bei dem Bildwiedergabegerät nach der Erfindung bevorzugt eine Detektionsvorrichtung zur Ortsdetektion von konkreten Gegenständen im Bereich der Stereobildebene vorgesehen sein. In der Mixed-reality-Darstellung können durch eine derartige Detektion beispielsweise Befehle ausgelöst werden.

Schließlich können die Bildstreifen und Zylinderlinsen noch bevorzugt schräg verlaufen (slanted Raster), wodurch sich eine Verringerung des Übersprechens zwischen den benachbarten Stereokanälen ergibt. In den Reservezonen können im Bildschirm Leiterbahnen, Transistoren und andere sichtbaren Strukturen integriert sein, die damit innerhalb der Pixelapertur nicht störend sind. Somit können auch herkömmliche Bildschirme eingesetzt werden und es ergibt sich eine gute Investitionssicherheit.

## AUSFÜHRUNGSBEISPIELE

Im nachfolgenden speziellen Beschreibungteil werden die entscheidenden physikalischen Bedingungen und die sich daraus ergebenden Parametereinstellungen für ein autostereoskopisches Bildwiedergabegerät aus einem Flachbildschirm und einer davor angebrachten Linsenrasterplatte mit einer Reihe parallel zueinander angeordneter Zylinderlinsen nach der Erfindung in bevorzugten Ausführungsformen anhand von schematischen Figuren näher vorgestellt. Dabei zeigt:

Figur 1 die geometrischen Parameter des Bildwiedergabegeräts,
Figur 2 ein Diagramm zur Filtereigenschaft des Auges,
Figur 3 ein Diagramm zur Gewichtungsfunktion,
Figur 4 ein Diagramm zur Wahrnehmung des Auges,
Figur 5 den prinzipiellen Strahlengang für einen Stereo-Kanal,
Figur 6 die geometrisch-optische Abbildung für zwei korrespondierende Punkte am Rand des rechten und linken Teilbildes,
Figur 7 eine Darstellung zur Füllung der Bildstreifen mit Bildinhalt,
Figur 8 eine Bildzeile, oben und unten umgeben von den daraus ausgelesenen Pixel-Gruppen und
Figur 9A-D eine Bildzeile mit aufeinander projizierten Bildstreifen bei unterschiedlichem Tracking.

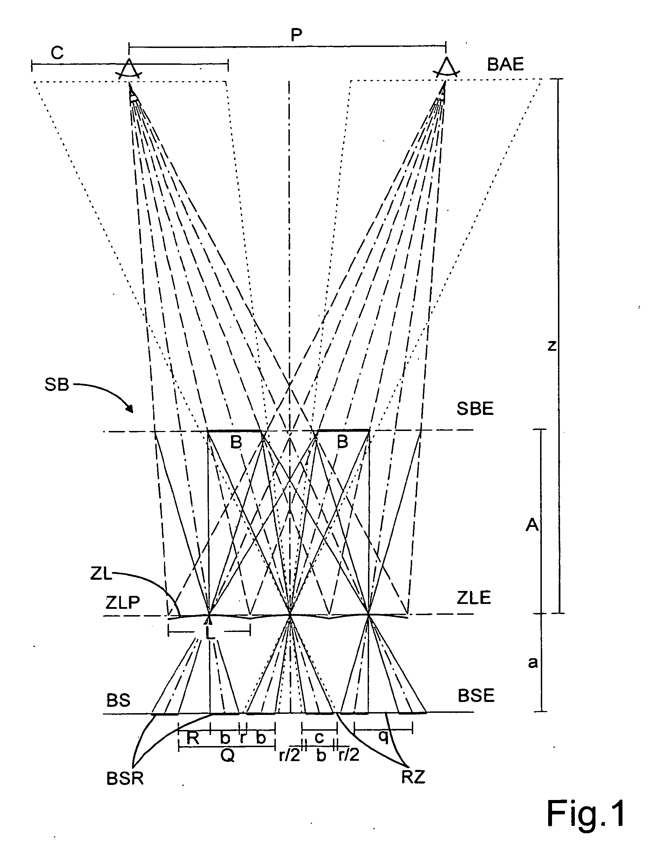

Die geometrischen Parameter des Bildwiedergabegeräts BWG sind in **Figur 1** dargestellt. Gezeigt wird die Bildschirmebene BSE (Bildschirm BS), die Zylinderlinsenebene ZLE (Zylinderlinsenplatte ZLP), die Stereobildebene SBE und die Betrachteraugenebene BAE. Auf dem flachen Bildschirm BS werden zwei Bilder - eines für das rechte und eines für das linke Auge - als Bildinformation streifenweise ineinander gefächert dargestellt. Vor dem Bildschirm BS ist im Abstand a (Objektabstand) eine Zylinderlinsenplatte ZLP mit parallelen, äquidistanten Zylinderlinsen ZL angebracht. Die Längsachsen der Zylinderlinsen ZL stehen in **Figur 1** senkrecht auf der Zeichenebene. Dabei sind die Zylinderlinsen ZL derzeit aus fertigungstechnischen Gründen alle identisch und besitzen den gleichen Linsenpitch L (Linsenbreite) und den gleichen Krümmungsradius. Mit einer fortgeschrittenen Fertigungstechnik sind auch diese Parameter durchaus variierbar.

Weitere Parameter in **Figur 1** werden im Zusammenhang mit den nachfolgenden Figuren erläutert.

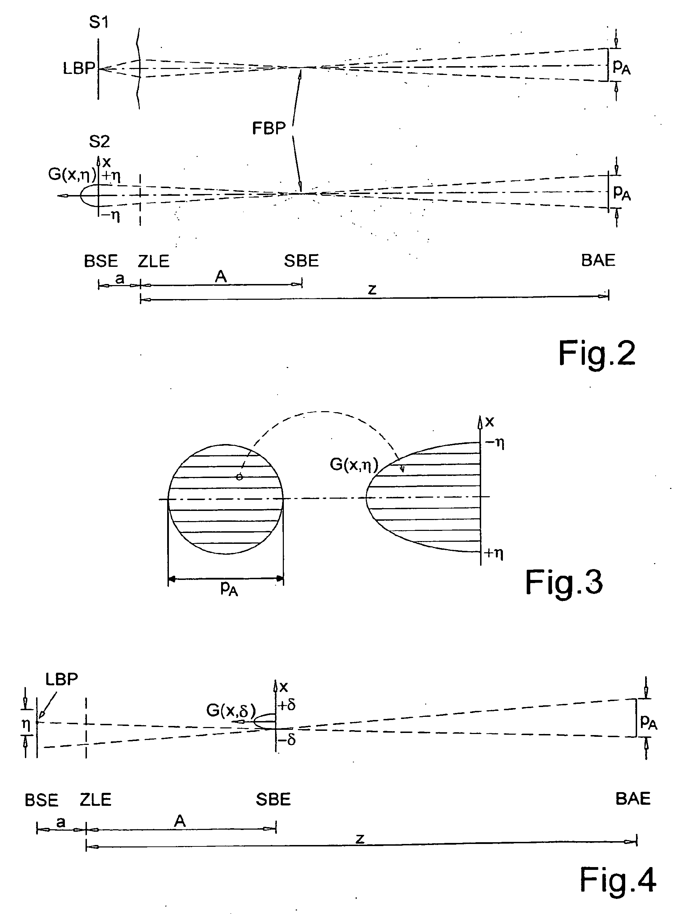

Ein in alle Richtungen leuchtender Punkt (Pixel) auf dem Bildschirm BS wird von einer Zylinderlinse ZL als reelle gerade Linie in die Stereobildebene SBE abgebildet. Eine Vielzahl leuchtender Punkte produziert somit eine ganze Reihe solcher Linien, jede parallel zu den Längsachsen der Zylinderlinsen ZL. Insbesondere erzeugen alle Punkte des Bildschirms BS, die auf einer Geraden parallel zu diesen Achsen liegen, reelle, direkt aufeinander fallende Linien in der Stereobildebene SBE. In dieser entsteht so eine weitgehend strukturlose, diffuse Helligkeitsverteilung, sodass mit einer Mattscheibe kein Bild aufgefangen werden kann. Obwohl also die bekannte Definition eines reellen Bildes auf Zylinderlinsen ZL nicht zutrifft ("ein reelles Bild lässt sich direkt auf einer Mattscheibe abbilden"), handelt es sich bei der mit dem Bildwiedergabegerät erzeugten Abbildung trotzdem um ein reelles Bild, insbesondere um ein reelles Stereobild SB. Die Erzeugung eines reellen Bildes mit linienförmig abbildenden Zylinderlinsen ZL wurde bislang im Stand der Technik nicht behandelt, sodass die bekannte Definition nicht auf diesen Abbildungslinsentyp anwendbar ist. Das mit derartigen Zylinderlinsen ZL erzeugte Helligkeitsbild kann aber durch das menschliche Auge ohne weiteres gefiltert werden. Die Augenpupille des Betrachters sondert aus den unzähligen, übereinander liegenden Bildern ein vergleichsweise scharfes Bild aus. Dies soll mit **Figur 2** illustriert werden.

Die Skizze oben in **Figur 2** zeigt einen Schnitt S1 quer zur Achse einer Zylinderlinse ZL durch einen leuchtenden Bildpunkt LBP auf dem Bildschirm BS. Das von diesem Punkt abgestrahlte Licht gelangt nur zum Teil in die Pupille $p_A$ des Auges. Unten in **Figur 2** ist der Schnitt S2 durch den leuchtenden Bildpunkt LBP parallel zur Achse einer Zylinderlinse ZL gelegt - also senkrecht zur Zeichenebene in **Figur 1**. Das divergente Licht im fokussierten Bildpunkt FBP kommt von den leuchtenden Bildpunkten LBP auf der x-Achse (Unschärfe in Richtung der Achse der Zylinderlinse ZL), die identisch ist mit der Schnittlinie von Zeichen-Ebene und Bildschirmebene BSE. In das Auge gelangt nur das Licht der Leucht-Punkte aus dem Bereich $(-\eta, +\eta)$ auf der x-Achse. Diese Punkte tragen unterschiedlich viel zur Helligkeit im Stereo-Bild bei: Das von einem leuchtenden Bildpunkt LBP senkrecht zur Zeichenfläche ausgestrahlte Licht - in **Figur 2** oben als Draufsicht zu sehen - markiert in der runden Augenpupille eine Kreis-Sehne. Die Länge dieser Sehne ist proportional zum Beitrag, den der leuchtenden Bildpunkt LBP auf dem Bildschirm BS zur Helligkeit des fokussierten Bildpunktes FBP im Stereobild SB leistet. In der **Figur 2** ist hellgrau das aus der Zylinderlinse ZL vom leuchtenden Bildpunkt LBP fallende Licht angedeutet.

Dieser individuelle Anteil lässt sich mit einer Gewichtungsfunktion G (x, η) beschreiben, welche die Sehnen-Länge eines Kreises mit dem Radius η in Abhängigkeit von ihrem Abstand x zum Mittelpunkt wiedergibt - siehe **Figur** 3. Die Sehnen-Länge dividiert durch die Kreisfläche ist die Gewichtungsfunktion:

$$G(x, \eta) = 2\sqrt{[\eta^2 - x^2]} / (\pi \eta^2) \qquad \text{mit} \quad |x| \leq \eta \qquad (1)$$

Die Fläche unter dieser Funktion ist gleich 1. Der Radius η entspricht der halben 'Fuß-Breite' des Funktions-Bogen.

Die betrachtete Stelle im Stereo-Bild leuchtet also mit dem vermischten Licht aller leuchtenden Bildpunkte LBP des Abschnitts $(-\eta, +\eta)$ auf dem Bildschirm BS, gewichtet mit G (x, η). Das mindert den Kontrast und die Farbwiedergabe im Stereo-Bild - und zwar abhängig vom Durchmesser der Augenpupille: je heller das Panel, desto enger die Augenpupille und desto kontrastreicher und farbreiner ist das Stereo-Bild.

In **Figur 4** ist der Fall dargestellt, dass im Bildstreifen BSR auf dem Bildschirm BS nur ein einziger Punkt leuchtet. Das Licht von diesem Punkt gelangt in das Auge, sobald der Betrachter auf Stellen innerhalb der Strecke $(-\delta, +\delta)$ auf der Stereobildebene SBE blickt. Beim Blick auf die Grenzpunkte $-\delta$ oder $+\delta$ ist das Licht gerade noch wahrnehmbar - es tritt dann am oberen oder unteren Rand der Pupille in das Auge des Betrachters. Die **Figur 4** zeigt den. Fall, bei dem das Auge auf den Punkt $-\delta$ in der Stereobildebene SBE fokussiert.

Der leuchtende Punkt auf dem Bildschirm BS ist also in der Stereobildebene SBE als mehr oder weniger scharf begrenzte Helligkeitsverteilung in Richtung der Zylinderlinsen ZL sichtbar. Diese Unschärfe lässt sich in derselben Weise wie oben über die Sehnen-Länge in der Augenpupille beschreiben, also mit der Gewichtungsfunktion G (x, $\delta$) und der 'Fuß-Breite' $2\delta$ des Funktionsbogens. Auch hier gilt: je heller der Bildschirm BS, desto enger die Augenpupille und desto schärfer ist das Stereobild SB. Die 'fuß-Breiten' hängen von den Abständen a (Objektabstand) zwischen Bildschirmebene BSE und Zylinderlinsenebene ZLE, A (Bildabstand) zwischen Zylinderlinsenebene ZLE und Stereobildebene SBE und z (Betrachterabstand) zwischen Zylinderlinsenebene ZLE und Betrachteraugenebene BAE sowie dem Durchmesser $p_A$ der Augenpupille ab. Nach **Figur 2** und **Figur 4** gilt:

$$2\eta = (a+A)/(z-A) * p_A \qquad (2)$$

und

$$2\delta = (a+A)/(z+a) * p_A \qquad (3)$$

Auch quer zu den Achsen der Zylinderlinse ZL bilden diese nicht punktförmig ab, aber auch hier beeinflusst die Augenpupille die Bildqualität positiv. Eine Abschätzung dieser 'Unschärfe' ist indes nur mit umfangreichen Rechnungen möglich.

**ABBILDUNG DURCH DIE ZYLINDERLINSEN**

Für die Abbildung der Zylinderlinsen ZL quer zur Zylinder-Achse - siehe **Figur 1** oder **Figur 2 -** gelten die bekannten Gesetze der Optik. Jede Zylinderlinse ZL bildet einen ausgedehnten Bereich des Bildschirms BS - beispielsweise einen Bildstreifen BSR - seitenverkehrt in die Stereobildebene SBE ab. Der Abbildungsmaßstab ist dabei gleich dem Verhältnis aus Bildabstand A (zwischen Zylinderlinsenebene ZLE und Stereobildebene SBE) zu Objektabstand a (zwischen Zylinderlinsenebene ZLE und Bildschirmebene BSE):

$$\beta \; = \; A\,/\,a \qquad\qquad (4)$$

Für das Auge sichtbar sind aber nur die Bildbereiche, die innerhalb der Verbindungslinien Augenpupille - rechter Linsenrand und Augenpupille - linker Linsenrand liegen. Diese in **Figur 1** mit B bezeichneten Abschnitte werden durch den Betrachterabstand z und den Bildabstand A sowie vom Linsenpitch L bestimmt:

$$B \; = \; L*(z-A)\,/\,z \qquad\qquad (5)$$

Auf dem Bildschirm BS entspricht das der Strecke:

$$b \; = \; L*(a\,/\,A - a\,/\,z) \qquad\qquad (6)$$

Die beiden Bereiche eines Bildstreifenpaares (Stereopaar) für das rechte und das linke Auge haben auf dem Bildschirm BS folgenden Abstand voneinander:

$$q \; = \; P*a\,/\,z \qquad\qquad (7)$$

Der periodische Abstand von Bildstreifenpaar zu Bildstreifenpaar entspricht der Projektion des Linsenpitches L auf den Bildschirm BS, mit dem Auge als Projektions-Zentrum. Er beträgt:

$$Q \; = \; L*(a+z)\,/\,z \qquad\qquad (8)$$

Die Lücken zwischen den sichtbaren Bereichen innerhalb der Bildstreifenpaare haben die Breite q - b:

$$R \; = \; a*(L+P)\,/\,z - L*a\,/\,A \qquad\qquad (9)$$

Die Lücken von Bildstreifenpaar zu Bildstreifenpaar haben die Breite Q-q-b:

$$r \; = \; a*(2L-P)\,/\,z + L*(1-a\,/\,A) \qquad\qquad (10)$$

Die durch die Gleichungen (5) bis (10) bestimmten Abstände und Breiten hängen von den Parametern L, A, a und z ab. Davon sind die ersten drei Parameter L, A und a durch den Aufbau des Bildwiedergabegeräts BWG festgelegt, also konstant. Der Abstand z hängt dagegen von der aktuellen Position des Betrachters ab. Das bedeutet, dass sich die Breiten B, b, R und r ändern, wenn der Betrachter seine Distanz zum Bildschirm BS verändert.

## SEITLICHE BEWEGUNG DES BETRACHTERS

Bewegt sich der Betrachter seitlich, dann verschiebt sich das Muster aus Bildstreifen BSR und Lücken auf dem Bildschirm BS dazu gegenläufig. Dabei geraten die sichtbaren Bereiche schon nach der kurzen Strecke r auf die Stellen, die für das andere Stereo-Bild vorgesehen sind. Um das zu vermeiden, muss das Bildmuster der seitlichen Bewegung des Betrachters im Verhältnis a / z nachgeführt werden. Dieses 'Tracking' verlangt eine umso höhere Genauigkeit, je schmaler die kleine Lücke r ist: diese sollte deswegen so groß wie möglich sein. Das ist der Fall, wenn beide Lücken gleich breit sind, also R = r gilt. Nach den Formeln (9) und (10) gilt das für folgenden Abstand zwischen Linsen und Panel:

$$a_{sym} = z * L / (2P - L) \qquad (11)$$

In dieser Beziehung tritt der Bildabstand A zwischen Zylinderlinsenebene ZLE und Stereobildebene SBE nicht auf, die Gleichheit der beiden Lücken R, r gilt also für jede Lage der Stereobildebene SBE. Bei einem solchen Bildschirm BS sind alle Bildstreifen BSR auf dem Bildschirm BS gleich breit und äquidistant. Die Lücken R, r zwischen den sichtbaren Bereichen stehen vollständig als Reservezonen für die Bewegung des Betrachters zur Verfügung und werden dazu - wie weiter unten dargelegt - mit Bildinformationen entsprechend gefüllt. Die beiden Bildstreifen eines Stereopaares haben nun auf dem Bildschirm BS folgenden Abstand voneinander:

$$q = L * P / (2P - L) \qquad (12)$$

und der periodische Abstand von Bildstreifenpaar zu Bildstreifenpaar beträgt:

$$Q = 2L * P / (2P - L) = 2q \qquad (13)$$

Die nutzbare Stereo-Kanalbreite c = q hat, in die Betrachteraugenebene BAE projiziert, eine Breite, welche dem Augenabstand entspricht:

$$C = P \qquad (14)$$

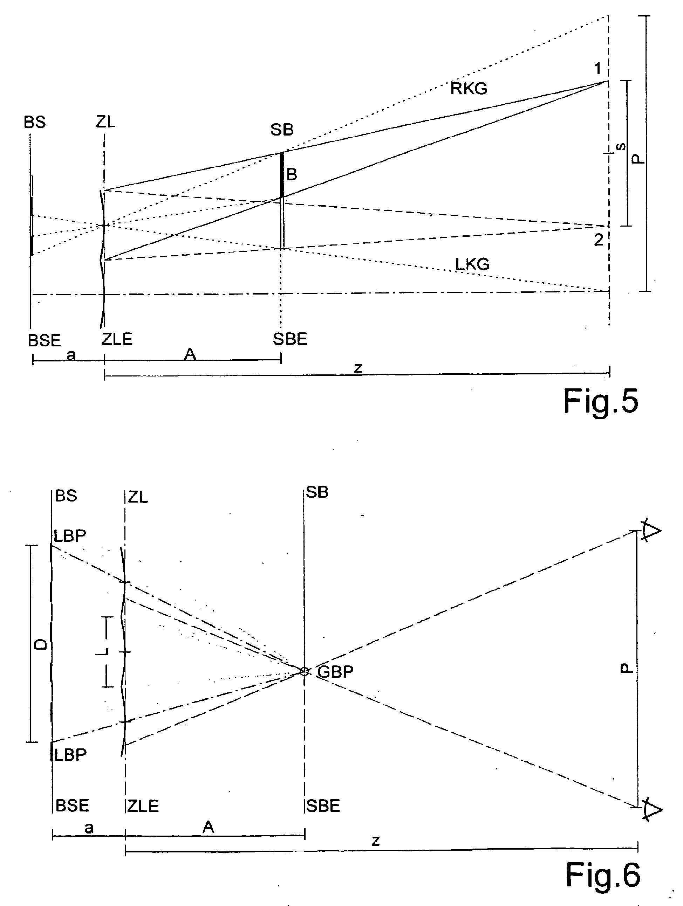

Die **Figur 5** zeigt den prinzipiellen Strahlengang für einen Stereo-Kanal. Der sichtbare Bereich B im Bildstreifen BSR ist von Reservezonen RZ umgeben, die links und rechts von den Kanalgrenzen (rechte Kanalgrenze RKG, linke Kanalgrenze LKG) beschnitten werden. Das Auge kann sich innerhalb der beiden Positionen 1 und 2 seitlich bewegen, ohne dass das Bildmuster auf dem Bildschirm BS dazu geändert werden muss. Der Freiraum s für die seitliche Bewegung ist nach **Figur 5:**

$$s = P + L - (z / A) * L \qquad (15)$$

Je weiter das Stereobild SB von den Zylinderlinsen ZL entfernt ist, desto größer ist dieser Spielraum, aber umso kleiner ist die Fläche des Bildschirms BS, die für das tatsächlich sichtbare Bild genutzt werden kann. Theoretisch wird die Nutzfläche zu Null, wenn A = z ist, das Stereobild SB also in der Betrachteraugenebene BAE liegt. Maximal genutzt wird die Fläche des Bildschirms BS, wenn der Freiraum s gleich Null ist, also bei völlig eingeschränkter Bewegungsfreiheit des Betrachters. Der Bildabstand $A_{min}$ zwischen Zylinderlinsenebene ZLE und Stereobildebene SBE ist dann:

$$A_{min} = z * L / (P + L) \qquad (16)$$

Auf dem Bildschirm BS stoßen jetzt die sichtbaren Bildbereiche b aneinander, es gibt keine Reservezonen RZ mehr. Bei seitlicher oder frontaler Bewegung des Betrachters sehen dessen Augen sofort das falsche Stereo-Bild: eine Bewegung ohne Tracking ist somit nicht möglich.

**ZUORDNUNG DER BILDSTREIFEN ZU DEN LINSEN**

Die **Figur 6** zeigt die geometrisch-optische Abbildung für zwei korrespondierende leuchtende Bildpunkte LBP am Rand des rechten und linken Teilbilds (hellgrau ist wiederum das von den leuchtenden Bildpunkten LBP ausgehende Licht angedeutet). Beide Bildpunkte LBP werden von zwei verschiedenen Zylinderlinsen ZL an dieselbe Stelle in der Stereobildebene SBE abgebildet. Die 'Mittenstrahlen' beginnen bei den leuchtenden Punkten auf dem Bildschirm BS, gehen durch die Mitten der Zylinderlinsen ZL und schneiden sich im gemeinsamen Bildpunkt GBP. Der seitliche Abstand der beiden einander zugeordneten korrespondierenden Punkte auf dem Bildschirm BS ergibt sich zu

$$D = N_L * L * (A + a) / A, \qquad\qquad (17)$$

wobei $N_L * L$ der Mitten-Abstand der beiden genutzten Zylinderlinsen ZL ist und $N_L$ eine natürliche Zahl im einstelligen Bereich. Auf dem Bildschirm BS sind die Bildstreifen BSR für das rechte Stereo-Bild zu denjenigen für das linke Stereo-Bild um die Strecke D versetzt. Beide Stereo-Bilder können daher auf dem Bildschirm BS eine Zone dieser Breite nicht nutzen.

### BILDSTREIFEN UND PIXEL-ANORDNUNG, TRACKING

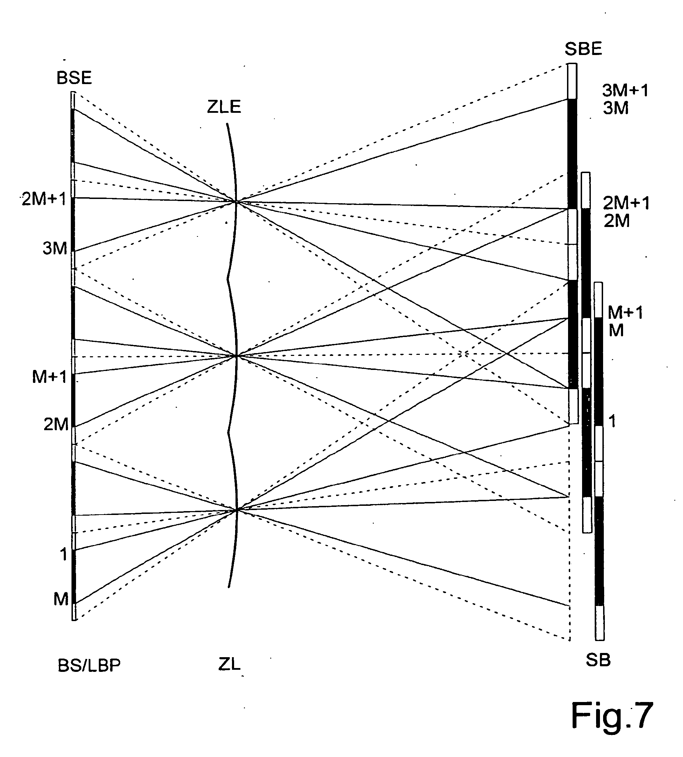

Die Bildstreifen BSR auf dem Bildschirm BS und ihr reelles Abbild in der Stereobildebene SBE sind zueinander seitenverkehrt. Damit der Betrachter ein zusammenhängendes Bild zu sehen bekommt, müssen die Bildstreifen BSR auf dem Bildschirm BS in einer Weise mit Bildinhalt gefüllt werden, wie dies **Figur 7** für eine Zeile des Stereobildes SB zeigt.

Hinter jeder Zylinderlinse ZL steht auf dem Bildschirm BS für die beiden Stereo-Bilder je ein Streifen mit der Breite c zur Verfügung; davon ist für den Betrachter nur ein Teilbereich der Breite b sichtbar. In die Strecke c mögen N Pixel passen, in den sichtbaren Bereich b davon M Pixel. Es ist also $M \leq N$. Die **Figur 7** zeigt die Zuordnung der Bildstreifen BSR auf dem Bildschirm BS zu denjenigen in der Stereobildebene SBE; die sichtbaren Pixel eines Stereo-Bildes sind nummeriert (die in der **Figur 7** nicht gezeigten Parameter sind der **Figur 1** zu entnehmen).

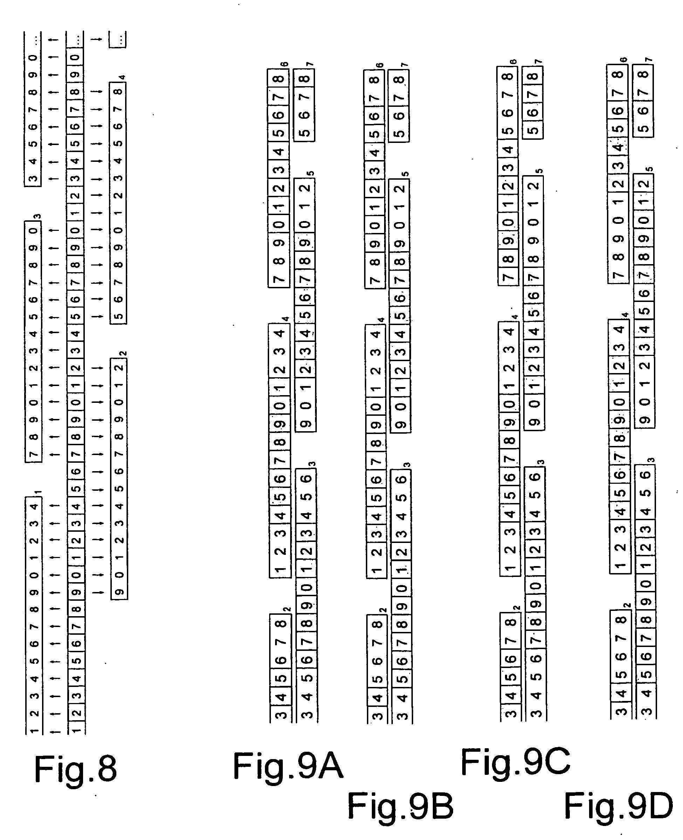

Das Einschreiben der Pixel einer Zeile eines Stereo-Bildes in die Bildstreifen BSR auf dem Bildschirm BS wird in **Figur 8** demonstriert. In die Streifen der Breite c sollen beispielsweise N = 14 Pixel passen, wovon M = 8 sichtbar sind. Dann werden der Bildzeile die ersten N = 14 Pixel entnommen und in den Bildstreifen BSR hinter der ersten Zylinderlinse ZL geschrieben. Für den Bildstreifen BSR hinter der zweiten Zylinderlinse ZL werden wieder N = 14 Pixel genommen, und zwar ab der Pixel-Nummer M + 1 = 9. Der Streifen hinter der dritten Zylinderlinse ZL bekommt aus der Bildzeile die nächsten N = 14 Pixel, und zwar ab der Pixel-Nummer 2M + 1 = 17. Diese Belegung wird so weiter geführt. Allgemein gilt: Für den i-ten Bildstreifen BSR werden von der Bildzeile N aufeinander folgende Pixel genommen, beginnend mit der Nummer (i -1) * M + 1.

Die **Figur 8** zeigt eine Bildzeile - oben und unten umgeben von den daraus ausgelesenen Pixel-Gruppen. Die Zahlen in den Kästchen entsprechen den Pixel-Nummern, wobei der Übersichtlichkeit wegen jeweils nur die letzte Stelle angegeben ist. Die Pixel-Gruppe für den ersten Bildstreifen BSR ist über der Bildzeile angeordnet, gekennzeichnet mit dem Index 1. Die Pixel-Gruppe für den zweiten Bildstreifen BSR ist unter der Bildzeile angeordnet, versehen mit dem Index 2. Diese Indizierung wird so weiter geführt. Alle Pixel-Gruppen überlappen sich gegenseitig.

Beim Füllen der Bildstreifen BS wurde nicht darauf geachtet, wo die sichtbaren Pixel aktuell liegen - günstig wäre die Mitte des Bildstreifens. In der Stereobildebene SBE sind die Pixel der Bildstreifen BSR aufeinander projiziert, wie in **Figur 9A** gezeigt. Der Betrachter sieht jeweils die Pixel der grauen Kästchen, also ein zusammenhängendes Stereobild SB. Bewegt er sich seitlich, dann verschieben sich zwar die sichtbaren und unsichtbaren Bereiche in den Pixel-Gruppen - das Stereobild SB bleibt dabei aber unverändert - **Figur 9B** illustriert das. Bewegt sich der Betrachter auf den Bildschirm BS zu, wandern Pixel aus dem sichtbaren Bereich in den unsichtbaren und umgekehrt. Das zeigen **Figur 9C** und **Figur 9D**. Der Betrachter sieht stets ein ungestörtes Bild. Die Breite der Reserve-Zonen begrenzt dabei den frontalen Bewegungsbereich (Distanz zum Bildschirm BS).

Der Bereich für die seitliche Bewegung kann durch 'Tracking' vergrößert werden: Die Betrachterposition wird erfasst, und beim Einschreiben der Pixel in die Bildstreifen berücksichtigt. Für das Verschieben des Pixel-Musters sind dazu am rechten und linken Rand des Panels zwei schmale Streifen freizuhalten. Ebenso kann eine Distanzänderung durch z-Tracking berücksichtigt werden.

### PRAKTISCHES BEISPIEL EINES BILDWIEDERGABEGERÄTS

Für den Entwurf eines Bildwiedergabegeräts BWG mit reellem Stereobild SB müssen folgende Daten vorgegeben werden: Der Betrachterabstand z, der Bildabstand A und der seitliche Bewegungsspielraum s ohne Tracking. Dazu kommt der Abstand P zwischen den beiden Augen eines Betrachters. Das Verhältnis aus der Strecke s und dem Pupillenabstand P ist ein Maß für die freie seitliche Bewegung:

$$\gamma = s / P \qquad\qquad (18)$$

Diese dimensionslose Maßzahl $\gamma$ soll im Folgenden zur Dimensionierung benutzt werden. Der geeignete Linsenpitch L für das Display ergibt sich dann nach Gleichung (15) zu:

$$L = A * P * (1-\gamma)/(z-A) \qquad (19)$$

Der Objektabstand für äquidistante und gleich breite Bildstreifen BSR auf dem Bildschirm BS ist:

$$a_{sym} = A * z * (1-\gamma)/(2z-A*(3-\gamma)) \qquad (11)$$

und die Ausdrücke für die Breiten der Bildstreifen BSR lauten:

$$q = A * P * (1-\gamma)/(2z-A*(3-\gamma)) \qquad (12)$$

$$b = A * P * (1-\gamma)^2/(2z-A*(3-\gamma)) \qquad (6)$$

Die 'Fuß-Breite' der Unschärfe ist dann:

$$\delta = A * (3-\gamma)/(2z)\, p_A \qquad (3)$$

(Für die letzten vier Ausdrücke wurden wieder die ursprünglichen Formeln-Nummern verwendeten.)

Für ein Bildwiedergabegerät BWG mit folgenden Vorgaben:

z=750mm A=200mm P=65mm

ergeben sich damit folgende Werte:

| $\gamma$ | L [mm] | $a_{sym}$ mm] | q [mm] | b [mm] | B [mm] | d [mm] |
|---|---|---|---|---|---|---|
| 0,4 | 14,1 | 91,8 | 7,9 | 4,78 | 10,3 | 1,0 |
| 0,5 | 11,8 | 75,0 | 6,5 | 3,25 | 8,6 | 1,0 |
| 0,6 | 9,4 | 58,8 | 5,0 | 2,04 | 6,9 | 0,9 |

In einer typischen Implementierung erscheinen virtuelle Objekte als reelle Stereobilder SB in einem Distanzbereich von 60 mm bis 220 mm vor dem Bildschirm BS und in einer minimalen/maximalen Greifentfernung von ca. 500 mm bis 700 mm bezogen auf den Betrachter.

## BEZUGSZEICHEN / FORMELZEICHEN

| | |
|---|---|
| A | Bildabstand (Abstand ZLE -SBE) |
| $A_{min}$ | minimaler Bildabstand |
| a | Objektabstand (Abstand BSE - ZLE) |
| $a_{sym}$ | Objektabstand bei äquidistanten BSR |
| B | Breite BSR in SB |
| b | momentan sichtbare Breite BSR auf dem BS |
| BAE | Betrachteraugenebene |
| BS | Bildschirm |
| BSE | Bildschirmebene |

(fortgesetzt)

| | |
|---|---|
| BSR | Bildstreifen |
| BWG | Bildwiedergabegerät |
| C | nutzbare Stereo-Kanalbreite, übertragen in die BAE |
| c | nutzbare Stereo-Kanalbreite auf BS |
| D | seitlicher Versatz der beiden Teilbilder auf BS |
| FBP | fokussierter Bildpunkt |
| G | Gewichtungsfunktion |
| GBP | gemeinsamer Bildpunkt |
| L | Linsenpitch |
| LBP | leuchtender Bildpunkt |
| LKG | linke Kanalgrenze |
| M | Anzahl der Pixel im sichtbaren Bereich b des BSR |
| N | Anzahl der Pixel im gesamten Bereich c des BSR |
| $N_L$ | Anzahl ZL, um die die beiden Stereobilder versetzt gesehen werden |
| P | Abstand der Betrachteraugen voneinander (65mm) |
| $p_A$ | Durchmesser der Augenpupille |
| Q | Abstand von BSR-Paar zu BSR-Paar auf BS bei $a_{sym}$ |
| q | Abstand der BSR-Paare voneinander auf BS bei $a_{sym}$ |
| R | Lücken-Breite zwischen den BSR eines Paares auf BS |
| r | Lücken-Breite zwischen benachbarten BSR-Paaren auf BS |
| RKG | rechte Kanalgrenze |
| RZ | Reservezone |
| S | seitlicher Bewegungsbereich ohne Tracking |
| SB | Stereobild |
| SBE | Stereobildebene |
| S1 | Schnitt quer zur Achse von ZL |
| S2 | Schnitt längs zur Achse von ZL |
| Z | Betrachterabstand Sollwert (Abstand ZLE - BAE) |
| ZL | Zylinderlinse |
| ZLE | Zylinderlinsenebene |
| ZLP | Zylinderlinsenplatte |
| ß | Abbildungsmaßstab |
| $\gamma$ | Verhältnis s/P (dimensionslose Maßzahl) |
| $\delta$ | Breite G in SBE (Unschärfe) |
| $\eta$ | Breite G auf BS |
| * | Multiplikationszeichen |

**Patentansprüche**

1. Autostereoskopisches Bildwiedergabegerät (BWG) mit einem Bildschirm (BS) und einer Zylinderlinsenplatte (ZLP) zur Darstellung der Bildinformation für das rechte Auge und das linke Auge eines Betrachters in Form von jeweils Bildstreifenpaare bildenden, alternierenden Bildstreifen (BSR) gleicher Breite, wobei die Zylinderlinsenplatte (ZLP) so vor dem Bildschirm (BS) angeordnet wird, dass für jedes Auge nur die zugehörige Bildinformation sichtbar wird, **dadurch gekennzeichnet, dass** jeder Bildstreifen (BSR) seitenverkehrt gegenüber seiner Anordnung in der originalen Bildinformation dargestellt und mit solchen Lücken (R, r) zu seinen beiden benachbarten Bildstreifen (BSR) auf dem Bildschirm (BS) positioniert ist, dass der Betrachter in einer Stereobildebene (SBE) zwischen seiner Betrachteraugenebene (BAE) und Zylinderlinsenebene (ZLE) eine lückenlose Darstellung der Bildinformation in Form eines schwebenden reellen Stereobildes (SB) erhält.

2. Autostereoskopisches Bildwiedergabegerät nach Anspruch 1,

**dadurch gekennzeichnet, dass**

zwischen den sichtbaren Bereichen eines Bildstreifen (BSR) für das rechte Auge und dem Bildstreifen (BSR) für das linke Auge in einem Bildstreifenpaar eine Lücke R vorhanden ist, die sich berechnet aus

$$R = a * (L + P) / z - L * a/A \qquad (I)$$

und zwischen benachbarten Bildstreifenpaaren eine Lücke r vorhanden ist, die sich berechnet aus

$$r = a * (2L - P) / z + L * (1 - a/A) \qquad (II)$$

mit

a = Objektabstand
A = Bildabstand
L = Linsenpitch
P = Abstand der Betrachteraugen voneinander
r = Lücke zwischen benachbarten Bildstreifenpaaren
R = Lücke zwischen den Bildstreifen eines Bildstreifenpaares
z = Betrachterabstand Sollwert.

3. Autostereoskopisches Bildwiedergabegerät nach Anspruch 2,
**dadurch gekennzeichnet, dass**
die Lücke R zwischen den Bildstreifen (BSR) eines Bildstreifenpaares und die Lücke r zwischen benachbarten Bildstreifenpaaren gleich groß sind und sich der Objektabstand errechnet zu:

$$a_{sym} = z * L / (2P - L) \qquad (III)$$

mit

$a_{sym}$ = Objektabstand bei äquidistanten Bildstreifen (BSR)

4. Autostereoskopisches Bildwiedergabegerät nach Anspruch 3,
**dadurch gekennzeichnet, dass**
sich der Objektabstand $a_{sym}$ bei äquidistanten Bildstreifen (BSR) errechnet zu:

$$a_{sym} = A * z * (1 - \gamma) / (2z - A * (3 - \gamma)) \qquad (IV)$$

mit

$\gamma = s / P$ = dimensionslose Maßzahl
s = seitlicher Bewegungsspielraum des Betrachters ohne Nachführung der Bildinformation

und die Bildstreifen (BSR) und der Linsenpitch (L) berechnet werden zu:

$$q = A * P * (1 - \gamma) / (2z - A * (3 - \gamma)) \qquad (V)$$

$$b = A * P * (1 - \gamma)^2 / (2z - A * (3 - \gamma)) \qquad (VI)$$

$$L = A * P * (1 - \gamma) / (z - A) \qquad (VII)$$

b = aktuell sichtbare Breite eines Bildstreifens (BSR) auf dem Bildschirm (BS)
q = Lücke zwischen den Bildstreifenpaaren auf dem Bildschirm (BS).

5. Autostereoskopisches Bildwiedergabegerät nach einem der Ansprüche 1 bis 4,
**dadurch gekennzeichnet, dass**
jedem Bildstreifen (BSR) seitliche Reservezonen (RZ) zugeordnet sind, mit deren Bildinformationen die Lücken (R, r) zwischen den Bildstreifen (BSR) gefüllt sind.

6. Autostereoskopisches Bildwiedergabegerät nach einem der Ansprüche 1 bis 5,
**dadurch gekennzeichnet, dass**
eine Trackingvorrichtung zur Anpassung der Bildwiedergabe an Bewegungen des Betrachters parallel zum Bildschirm und/oder im Raum vorgesehen ist.

7. Autostereoskopisches Bildwiedergabegerät nach einem der Ansprüche 1 bis 6,
**dadurch gekennzeichnet, dass**
eine Detektionsvorrichtung zur Ortsdetektion von konkreten Gegenständen im Bereich der Stereobildebene (SBE) vorgesehen ist.

8. Autostereoskopisches Bildwiedergabegerät nach einem der Ansprüche 1 bis 7,
**dadurch gekennzeichnet, dass**
Bildstreifen (BSR) und Zylinderlinsen (ZL) schräg verlaufen.

**Claims**

1. Autostereoscopic image display appliance (BWG) with a screen (BS) and a cylinder lens plate (ZLP) for displaying image information for the right eye and the left eye of an observer in the form of alternating image strips (BSR) of the same width which respectively form pairs of image strips, the cylinder lens plate (ZLP) being disposed in front of the screen (BS) such that only the associated image information becomes visible for each eye,
**characterised in that**
each image strip (BSR) is displayed side-inverted relative to its arrangement in the original image information and is positioned with such gaps (R, r) relative to its two adjacent image strips (BSR) on the screen (BS) that the observer, in a stereo image plane (SBE) between his observer eye plane (BAE) and cylinder lens plane (ZLE), obtains a continuous display of the image information in the form of a floating real stereo image (SB).

2. Autostereoscopic image display appliance according to claim 1,
**characterised in that**
there is present between the visible regions of an image strip (BSR) for the right eye and the image strip (BSR) for the left eye in one image strip pair a gap R which is calculated from

$$R = a * (L + P)/z - L * a/A \qquad (I)$$

and there is present between adjacent image strip pairs a gap r which is calculated from

$$r = a * (2L - P)/z + L * (1 - a/A) \qquad (II)$$

with

a = lens spacing
A = image spacing
L = lens pitch
P = spacing of the eyes of the observer from each other

r = gap between adjacent image strip pairs
R = gap between the image strips of one image strip pair
z = observer spacing reference value.

3. Autostereoscopic image display appliance according to claim 2,
   **characterised in that**
   the gap R between the image strips (BSR) of an image strip pair and the gap r between adjacent image strip pairs are of equal size and the lens spacing is calculated at

$$a_{sym} - z * L/(2P - L) \qquad (III)$$

with

$a_{sym}$ = lens spacing with equidistant image strips (BSR).

4. Autostereoscopic image display appliance according to claim 3,
   **characterised in that**
   the lens spacing $a_{sym}$ with equidistant image strips (BSR) is calculated at

$$a_{sym} = A * z * (1 - \gamma)/(2z - A * (3 - \gamma)) \qquad (IV)$$

with

$\gamma = s/P$ = dimensionless dimension figure
s = lateral movement margin of the observer without tracking the image information

and the image strips (BSR) and the lens pitch (L) are calculated at:

$$q = A * P * (1 - \gamma)/(2z - A * (3 - \gamma)) \qquad (V)$$

$$b = A * P * (1 - \gamma)^2/(2z - A * (3 - \gamma)) \qquad (VI)$$

$$L = A * P * (1 - \gamma)/(z - A) \qquad (VII)$$

b = currently visible width of an image strip (BSR) on the screen (BS)
q = gap between the image strip pairs on the screen (BS).

5. Autostereoscopic image display appliance according to one of the claims 1 to 4,
   **characterised in that**
   lateral reserve zones (RZ) are assigned to each image strip (BSR), with the image information of which reserve zones the gaps (R, r) between the image strips (BSR) are filled.

6. Autostereoscopic image display appliance according to one of the claims 1 to 5,
   **characterised in that**
   a tracking device for adapting the image display to movements of the observer parallel to the screen and/or in space is provided.

7. Autostereoscopic image display appliance according to one of the claims 1 to 6,
   **characterised in that**
   a detection device is provided for location detection of concrete objects in the region of the stereo image plane (SBE).

8. Autostereoscopic image display appliance according to one of the claims 1 to 7,

EP 2 122 415 B1

**characterised in that**
image strips (BSR) and cylinder lenses (ZL) extend diagonally.

**Revendications**

1. Appareil de reproduction d'image (BWG) autostéréoscopique avec un écran (BS) et une plaque à lentilles cylindriques (ZLP) pour représenter l'information d'image pour l'oeil droit et l'oeil gauche d'un observateur respectivement sous forme de bandes d'image (BSR) alternantes, de même largeur, formant des paires de bandes d'image, dans lequel la plaque à lentilles cylindriques (ZLP) est agencée devant l'écran (BS) de telle sorte que seule l'information d'image correspondante est visible pour chaque oeil, **caractérisé en ce que**
chaque bande d'image (BSR) est représentée de manière inversée latéralement par rapport à son agencement dans l'information d'image originelle et est positionnée sur l'écran (BS) avec des interstices (R, r) tels par rapport à ses deux bandes d'image (BSR) avoisinantes que l'observateur obtient dans un plan d'image stéréo (SBE) entre son plan d'oeil d'observateur (BAE) et le plan à lentilles cylindriques (ZLE) une représentation sans interstice de l'information d'image sous la forme d'une image stéréo (SB) réelle flottante.

2. Appareil de reproduction d'image autostéréoscopique selon la revendication 1, **caractérisé en ce qu'**entre les zones visibles d'une bande d'image (BSR) pour l'oeil droit et la bande d'image (BSR) pour l'oeil gauche, il existe dans une paire de bandes d'image un interstice R qui se calcule à partir de :

$$R = a * (L + P) / z - L * a/A \qquad\qquad (I)$$

et entre des paires de bandes d'image avoisinantes, il existe un interstice r qui se calcule à partir de :

$$r = a * (2L - P) / z + L * (1 - a/A) \qquad\qquad (II)$$

où

  a = distance de l'objet
  A = distance de l'image
  L = pitch entre lentilles
  P = distance entre les yeux de l'observateur
  r = interstice entre des paires de bandes d'image avoisinantes
  R = interstice entre les bandes d'image d'une paire de bandes d'image
  z = valeur de consigne de la distance de l'observateur.

3. Appareil de reproduction d'image autostéréoscopique selon la revendication 2, **caractérisé en ce que** l'interstice R entre les bandes d'image (BSR) d'une paire de bandes d'image et l'interstice r entre des paires de bandes d'image avoisinantes ont la même taille, et la distance à l'objet se calcule avec :

$$a_{sym} = z * L / (2P - L) \qquad\qquad (III)$$

où

  $a_{sym}$ = distance à l'objet en présence de bandes d'image (BSR) équidistantes.

4. Dispositif de reproduction d'image autostéréoscopique selon la revendication 3, **caractérisé en ce que** la distance à l'objet $a_{sym}$ en présence de bandes d'image (BSR) équidistantes se calcule avec :

$$a_{sym} = A * z * (1 - \gamma) / (2z - A * (3 - \gamma)) \qquad\qquad (IV)$$

où

$\gamma$ = s / P = cote dimensionnelle sans dimension

s = marge de mouvement latéral de l'observateur sans guidage de l'information d'image

et les bandes d'image (BSR) et le pitch entre lentilles (L) se calculent avec :

$$q = A * P * (1 - \gamma) / (2z - A * (3 - \gamma)) \qquad (V)$$

$$b = A * P * (1 - \gamma)^2 / (2z - A * (3 - \gamma)) \qquad (VI)$$

$$L = A * P * (1 - \gamma) / (z - A) \qquad (VII)$$

où

b = largeur actuellement visible d'une bande d'image (BSR) sur l'écran (BS)

q = interstice entre les paires de bandes d'images sur l'écran (BS).

5. Appareil de reproduction d'image autostéréoscopique selon l'une quelconque des revendications 1 à 4, **caractérisé en ce qu'**à chaque bande d'image (BSR) sont affectées des zones de réserve (RZ) latérales, dont les informations d'image remplissent les interstices (R, r) entre les bandes d'image (BSR).

6. Appareil de reproduction d'image autostéréoscopique selon l'une quelconque des revendications 1 à 5, **caractérisé en ce qu'**il est prévu un dispositif de localisation pour ajuster la reproduction d'image aux mouvements de l'observateur parallèlement à l'écran et/ou dans l'espace.

7. Appareil de reproduction d'image autostéréoscopique selon l'une quelconque des revendications 1 à 6, **caractérisé en ce qu'**il est prévu un dispositif de détection pour la détection de l'emplacement d'objets concrets dans la zone du plan d'image stéréo (SBE).

8. Appareil de reproduction d'image autostéréoscopique selon l'une quelconque des revendications 1 à 7, **caractérisé en ce que** les bandes d'image (BSR) et les lentilles cylindriques (ZL) s'étendent en oblique.

Fig.1

Fig.2

Fig.3

Fig.4

Fig.5

Fig.6

Fig.7

Fig.8  Fig.9A  Fig.9C

Fig.9B  Fig.9D

**IN DER BESCHREIBUNG AUFGEFÜHRTE DOKUMENTE**

**In der Beschreibung aufgeführte Patentdokumente**

- DE 69900470 T2
- US 20040227992 A1
- US 6771231 B2
- DE 19537499 C2
- DE 19827590 C2
- WO 9203021 A1